# EUROPÄISCHE PATENTSCHRIFT

(11) **EP 1 288 062 B1**
(45) Veröffentlichungstag und Bekanntmachung des Hinweises auf die Patenterteilung: **26.10.2005**
(21) Anmeldenummer: 02013343.5
(22) Anmeldetag: 19.06.2002
(51) Int. Cl.: B60N 2/427, B60N 2/48

(54) **Kopfstütze für Automobilsitze**
Head rest for automotive seats
Appui-tête pour sièges d'automobile

(30) Priorität: 31.08.2001 DE 10142625
(43) Veröffentlichungstag der Anmeldung: 05.03.2003
(73) Patentinhaber: ITW Automotive Products GmbH & Co. KG, 58636 Iserlohn (DE)
(72) Erfinder: Gramss, Rainer, 58636 Iserlohn (DE); Albracht, Carsten, 58640 Iserlohn (DE)
(74) Vertreter: Hauck, Graalfs, Wehnert, Döring, Siemons

(56) Entgegenhaltungen:
- DE-A- 3 900 495
- DE-A- 19 707 998
- DE-A- 19 961 617
- DE-U- 29 603 991
- DE-U- 29 808 982

## Beschreibung

Die Erfindung bezieht sich auf eine Kopfstütze für Automobilsitze nach dem Patentanspruch 1 (s. zum Beispiel DE-A-39 00 495, dem Oberbegriff entsprechend).

Üblicherweise bestehen Kopfstützen aus einem Polsterteil, das mit Hilfe von zwei Stangen in der Lehne eines Sitzes verschiebbar anbringbar ist, wobei die Stangen in Kopfstützenhülsen der Lehnen eingeführt sind. Das Polsterteil enthält ein Trägerteil, das mit den Kopfstützenstangen verbunden ist.

In aller Regel sind die Kopfstützen in einem Fahrzeug falsch oder unzureichend angeordnet und in einer Position, die dem Fahrer- bzw. Beifahrer angepaßt ist. Bei einem Unfall durch einen Heckaufprall erzeugt ein großer Abstand zwischen Kopf- und Kopfstütze starke Dehnungen im Nackenbereich, wodurch erhebliche Genickverletzungen hervorgerufen werden können. Eine Fehleinstellung ergibt sich insbesondere aus einer zu niedrigen Position der Kopfstütze auf der Sitzlehne.

Aus DE-U-298 08 982 ist bekannt geworden, in einer nach vom offenen Ausnehmung eines Kopfstützenpolsters ein Polsterteil aufzunehmen, das mit Hilfe eines Gassacks und eines Gasgenerators sehr schnell nach vom bewegt werden kann, wenn ein Aufprall auf das Automobil erfolgt.

Aus der o.g. DE-A-39 00 495 ist bekannt geworden, an einem ersten Trägerteil einer Kopfstütze ein zweites Trägerteil über ein Gestänge anzulenken, wobei das Gestänge in die ausgefahrene Stellung des zweiten Trägerteils vorgespannt ist. Hierzu dient ein federvorgespannter Kolben in einem Zylinder, der im ersten Trägerteil angebracht ist. Der Kolben ist außerdem über einen Hebel an das zweite Trägerteil angelenkt, so daß bei einer Betätigung des Kolbens das Polsterteil in die ausgefahrene Stellung verstellt wird. Eine Verriegelungsvorrichtung verriegelt das zweite Trägerteil am ersten Trägerteil und kann im Auslösefall durch eine Entriegelungsvorrichtung entriegelt werden.

In EP-A-1 193 114 A1 (Stand der Technik gemäß Artikel 54(3) EPÜ) ist eine Kopfstütze beschrieben, die crashaktiv ist. Sie weist ein erstes festes Trägerteil auf, das über Kopfstützenstangen mit der Lehne des Fahrzeugsitzes verbunden ist. Das schalenförmige erste Trägerteil ist über ein Parallelogrammgestänge mit einem schalenförmigen zweiten Teil gekoppelt, das mit Hilfe einer Feder in die ausgefallene Stellung vorgespannt und in es eingefahrenen Stellung durch eine Verriegelungsvorrichtung gehalten ist. Die Verrieglungsvorrichtung wird durch einen Crashsensor entriegelt. In der nachveröffentlichten EP-A-1 284 215 ist eine crashaktive Kopfstütze beschrieben, bei der auf beiden Seiten der Kopfstütze um eine vertikale Achse drehbare Teile angeomdet sind, die bei einem Crash rotieren und zwischen sich ein Tuch aufspannen. Aus der ebenfalls nachveröffentlichten WO-A-02/068237 ist eine crashaktive Kopfstütze bekannt geworden, bei der eine erste Baugruppe sich im Crashfall relativ zur zweiten stationären Baugruppe nach vorn auf den Kopf des Fahrers zu bewegt. Unterhalb der zweiten Baugruppe ist eine dritte Baugruppe vorgesehen, gegenüber welcher sich die erste Baugruppe im Crashfall nach oben bewegt.

Der Erfindung liegt die Aufgabe zugrunde, eine Kopfstütze zu schaffen, mit dem der oben beschriebene Fehler ausgeglichen werden soll.

Diese Aufgabe wird durch die Merkmale des Patentanspruchs 1 gelöst.

Bei der Erfindung wird das bewegliche Polsterteil in der ausgefahrenen Position gegenüber dem festen Polsterteil angehoben. Mithin wird das bewegliche Polsterteil nicht nur zum Kopf der Sitzposition hin, sondern auch gegenüber dem Kopf angehoben. Dazu wird ein Parallelogrammgestänge verwendet, das durch eine Feder vorgespannt ist. Wird die Feder ausgelöst und aus einer verriegelten Position freigegeben, kann das Parallelogrammgestänge das bewegliche Polsterteil ausfahren und das bewegliche Polsterteil nahe dem Hinterkopf der Sitzperson bringen.

Das zum Hinterkopf des Fahrers hinbewegte Polsterteil sorgt bei einem Aufprall auf das Heck des Fahrzeuges für eine unmittelbare Abstützung des Fahrerkopfes, so daß dieser so gut wie gar nicht dem sogenannten Peitscheneffekt unterworfen ist. Nach dem Unfall läßt sich die Kopfstütze wieder in ihre Ausgangsstellung bzw. zurückgefahrene Stellung zurückbewegen und ist erneut funktionsfähig.

Das plattenförmige zweite Trägerteil liegt in der eingefahrenen Position zwischen den säulenförmigen Abschnitten des ersten festen Trägerteils. Dadurch wird eine äußerst platzsparender Aufbau der Kopfstütze erzielt.

Es versteht sich, daß dafür gesorgt werden muß, daß bei einem Aufprall auf das bewegliche Polsterteil dieses nicht zu stark nachgibt, vielmehr den Aufprall aufnimmt. Dazu ist ein Anschlag vorgesehen, gegen den sich ein oder mehrere Hebel des Parallelogrammgestänges anlegen, wenn durch Aufprall auf das bewegliche Polsterteil eine Kraft in Richtung festes Polsterteil ausgeübt wird. Es sind jedoch auch Verriegelungsmechanismen denkbar, welche das ausgefahrene bewegliche Polsterteil verriegeln, um eine entsprechende Kraft aufnehmen zu können.

Diese Verriegelung ist dann aufzuheben, wenn das bewegliche Polsterteil wieder zurück in die Ruhestellung bewegt werden soll.

Wie schon erwähnt, kann das bewegliche Polsterteil durch eine Feder in die ausgefahrene Position vorgespannt werden, und es ist eine Verriegelungsvorrichtung vorgesehen, welche die Feder oder das Gestänge gegen die Vorspannung der Feder in der eingefahrenen Position verriegelt. Eine geeignete Betätigungsvorrichtung sieht eine Entriegelungsvorrichtung vor, um die Verriegelungsvorrichtung zu lösen. Hierzu kann nach einer Ausgestaltung der Erfindung ein Kabelzug dienen, der die Entriegelung herbeiführt. Der Kabelzug ist an einer Stelle anzubringen, welche geeignet ist, den Kabelzug zu betätigen, wenn ein Heckaufprall stattfindet. Hierbei kann z.B. auch der Druck ausgenutzt werden, mit dem der Rücken der sitzenden Person auf die Rückenlehne wirkt, wenn auf das Heck des Fahrzeugs ein Stoß aufgebracht wird.

Es ist jedoch auch denkbar, die Kraft zur Verstellung des beweglichen Polsterteils an einem von der Kopfstütze entfernten Teil aufzubringen und hierzu eine Übertragung mit Hilfe eines Kabelzugs vorzusehen. Auch hierfür sind verschiedene konstruktive Möglichkeiten denkbar. Eine besteht darin, daß die Betätigungsvorrichtung ein erstes und ein zweites Bauteil aufweist, die aufeinander zu und voneinander fort beweglich gelagert sind und zwischen denen eine Feder angeordnet ist, welche die Bauteile voneinander fort vorspannt. An einem der Bauteile ist ein Schlitten geführt, an dem ein Hebel angelenkt ist, der mit dem anderen Ende am anderen Bauteil angelenkt ist. An dem Schlitten ist ein Kabelzug angeschlagen. Der Schlitten wird verfahren, wenn die Bauteile aufeinander zu bewegt bzw. voneinander wegbewegt werden. Auf diese Weise wird der Schlitten verstellt und es kann eine Verstellkraft auf das Kabel ausgeübt werden, daß seinerseits das bewegliche Polsterteil in die ausgefahrene Position verstellt. Die Anlenkung des Trägerteils an dem beweglichen Polsterteil kann wiederum in der gleichen Weise durchgeführt sein, wie dies oben bereits erläutert wurde.

Das bewegliche Polsterteil wird vorzugsweise ganz oder teilweise vom festen Polsterteil aufgenommen. Daher sieht eine Ausgestaltung der Erfindung vor, daß das feste Trägerteil U-förmig gestaltet ist und das bewegliche Trägerteil vorzugsweise plattenförmig, wobei die Abmessungen derart sind, daß das bewegliche Polsterteil in eine entsprechende Ausnehmung des festen Polsterteils aufgenommen ist, wenn es sich in einer Ruhestellung befindet.

Ausführungsbeispiele der Erfindung werden nachfolgend näher anhand von Zeichnungen erläutert.
- Fig. 1: zeigt die Vorderansicht der Trägerteile einer Kopfstütze nach der Erfindung.
- Fig. 2: zeigt eine ähnliche Ansicht wie Fig. 1 bei ausgefahrenem beweglichen Trägerteil der erfindungsgemäßen Kopfstütze.
- Fig. 3: zeigt eine Einzelheit der Kopfstütze nach den Figuren 1 und 2.
- Fig. 4: zeigt die Trägerteile einer abgewandelten Ausführungsform einer Kopfstütze nach der Erfindung.
- Fig. 5: zeigt perspektivisch die Rückansicht der Trägerteile nach Fig.4.
- Fig. 6.: zeigt perspektivisch teilweise aufgeschnitten eine Betätigungsvorrichtung für die Kopfstütze nach den Figuren 4 und 5.
- Fig. 7: zeigt perspektivisch die Rückseite eines Teils der Betätigungsvorrichtung nach Figur 6.
- Fig. 8: zeigt perspektivisch eine andere Ansicht der Betätigungsvorrichtung nach Fig. 6, jedoch im betätigten Zustand.
- Fig. 9: zeigt eine ähnliche Ansicht wie Fig. 8, jedoch im betätigten Zustand.

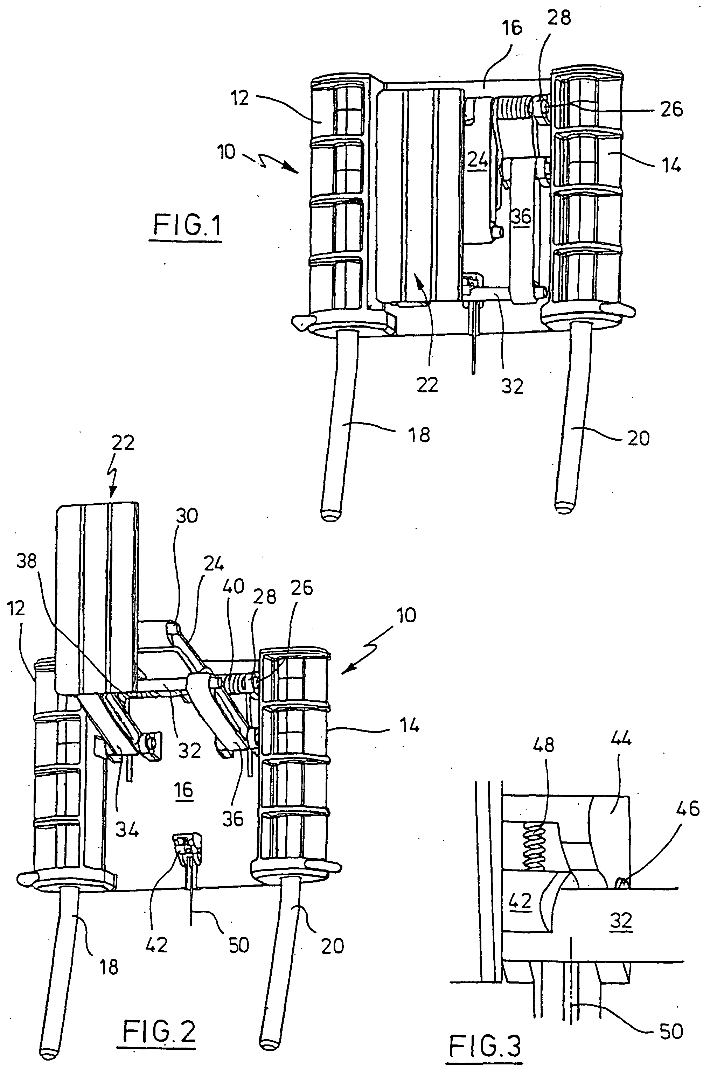

In den Figuren 1 und 2 ist ein festes Trägerteil zu sehen, für eine Kopfstütze dargestellt, das aus zwei beabstandeten säulenartigen Abschnitten 12, 14 sowie einer diese verbindenden Platte 16 besteht. Die Teile 12 bis 16 sind einteilig aus einem geeignetem festen Kunststoffmaterial geformt. Kopfstützenstangen 18, 20 sind in den Säulenabschnitten 12, 14, fest angebracht und dienen zum Einstecken in Kopfstützenhülsen einer nicht gezeigten Rückenlehne eines Automobilsitzes. An der Rückseite des beschriebenen Trägerteils 10, der Oberseite und seitlich der Säulenabschnitte 12 und 14 ist eine nicht gezeigte Polsterung angebracht, wie bei Kopfstützen üblich und bekannt.

Zwischen den Säulenabschnitten 12, 14 befindet sich ein plattenförmiges, bewegliches Trägerteil 22, für ein bewegliches Kopfstützenteil. Es ist ebenfalls aus einem geeignetem festen Kunststoffmaterial geformt. Es kann zwischen einer zurückgezogenen Position gemäß Fig. 1, in der es zwischen den Säulenabschnitten 12, 14 liegt und einer vorgefahrenen Position gemäß Fig. 2, in der es gegenüber dem festen Trägerteil 10 vorsteht und auch angehoben ist, hin und her bewegt werden. Zu diesem Zweck ist das bewegliche Trägerteil 22 an einem Parallelogrammgestänge angelenkt. Das Parallelogrammgestänge weist einen ersten und oberen relativ breiten Hebel 24 auf, der über eine Achse 26 an der Vorderseite der Platte 16 angelenkt ist. Die Achsstange 26 ist in Konsolen, von denen eine bei 28 dargestellt ist, an der Vorderseite der Platte 16 gehalten. An der Rückseite des plattenförmigen Trägerteils 22, das nur teilweise dargestellt ist (in Wirklichkeit nimmt es annähernd den Platz zwischen den Säulenabschnitten 12, 14 ein) sind Konsolen angebracht, in denen eine Achsstange 30 gelagert ist zur Anlenkung des Hebels 24 an der Rückseite der beweglichen Trägerplatte 22.

In entsprechenden Konsolen (nicht gezeigt) an der Rückseite der Trägerplatte 22, ist eine weitere Achsstange 32 drehbar gelagert, die mit zwei parallel beabstandeten Hebeln 34, 36 gekoppelt ist. Die Hebel 34, 36 sind in entsprechenden Konsolen an der Vorderseite der Platte 16 angelenkt, was im einzelnen nicht beschrieben werden soll. Auf der Achsstange 26 sind auf gegenüberliegenden Seiten des Hebels 24 jeweils Federn 38, 40 angeordnet, welche das beschriebene Parallelogrammgestänge in eine Position vorspannen, die in Fig. 2 dargestellt ist.

Das bewegliche Trägerteil 22 ist seinerseits von einer Polsterung umgeben (nicht gezeigt). Es dient dazu, den Hinterkopf der auf dem nicht gezeigten Sitz sitzenden Person in günstiger Weise abzustützen, wenn aufgrund eines Auffahrunfalls der Kopf nach hinten gerissen wird. Die Hebel 24, 34 und 36 sind nach oben geneigt, und es ist durch eine Feder oder einen nicht gezeigten Anschlag sichergestellt, daß die gezeigte Stellung gemäß Fig. 2 durch einen Druck auf das bewegliche Trägerteil 22 durch weiteres Verschwenken nach oben nicht verlassen wird.

Soll das bewegliche Trägerteil 22 die Position nach Fig. 1 einnehmen, ist es herunter zu schwenken, was von Hand vorgenommen werden kann. Dabei schwenkt die Stange 32 hinter einen Haken 42, der in Fig. 3 näher dargestellt ist. An der Vorderseite der Platte 16 ist eine Konsole 44 angeformt, in der der Haken 32 schwenkbar gelagert ist und zwar bei 46 um eine annähernd horizontale Achse. Der Haken ist außerdem durch eine Feder 48 nach unten vorgespannt. Durch Einschwenken der Stange 32 gegen die abgerundete schräge Vorderseite des Hakens 42 wird dieser vorübergehend nach oben ausgelenkt und schnappt dann über die Stange 32, so daß das Trägerteil 22 in der Fig. 1 gezeigten Position gehalten wird. Mit Hilfe eines Kabelzuges, der bei 50 angedeutet ist, kann der Haken 42 nach oben geschwenkt werden. Dadurch ermöglichen die Federn 38, 40 die Verschwenkung des Gestänges und die Bewegung des Trägerteils 22 in die in Fig. 2 dargestellte Position.

Die Betätigung des Seils 50 wird nicht dargestellt. Sie erfolgt in einer Weise von einer Einrichtung aus, welche einen Auffahrstoß auf das Heck des nicht gezeigten Fahrzeugs in eine Zugbewegung des Seils 50 umsetzt.

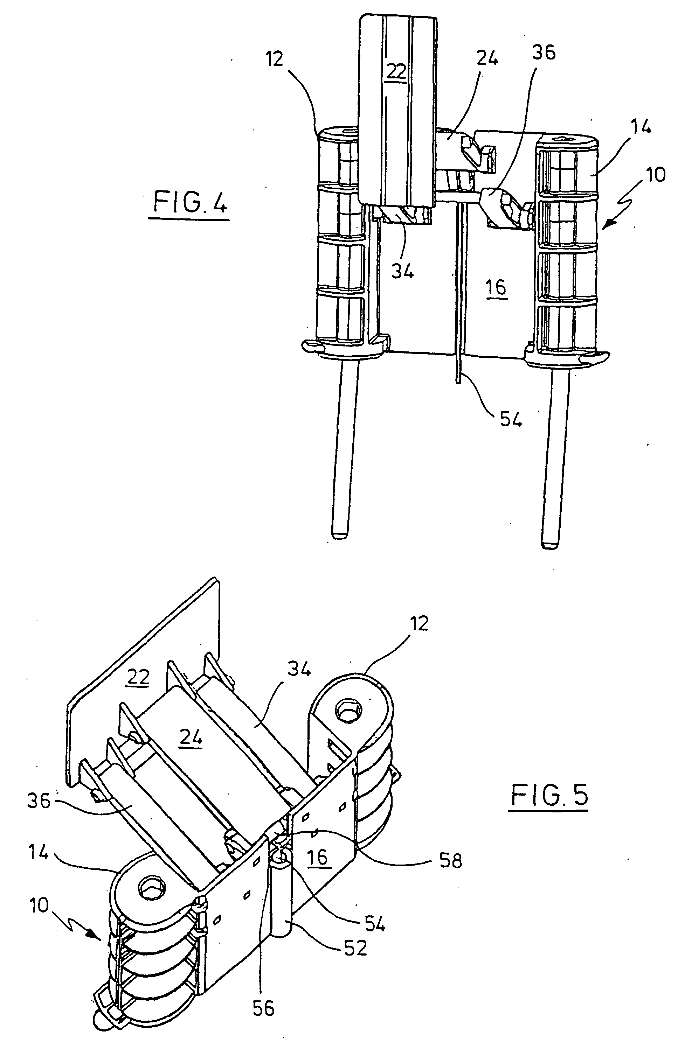

Soweit bei der Ausführungsform nach den Figuren 4 und 5 gleiche oder ähnliche Teile wie bei der Ausführungsform nach den Figuren 1 bis 3 verwendet werden, werden sie mit gleichen Bezugszeichen versehen.

In Fig. 5 ist besonders gut die Anlenkung der Hebel 34, 24 und 36 an der Rückseite des beweglichen Trägerteils 22 zu erkennen, das in Fig. 5 auch vollständig dargestellt ist, im Gegensatz zu Fig. 4, wo es nur zur Hälfte zu erkennen ist.

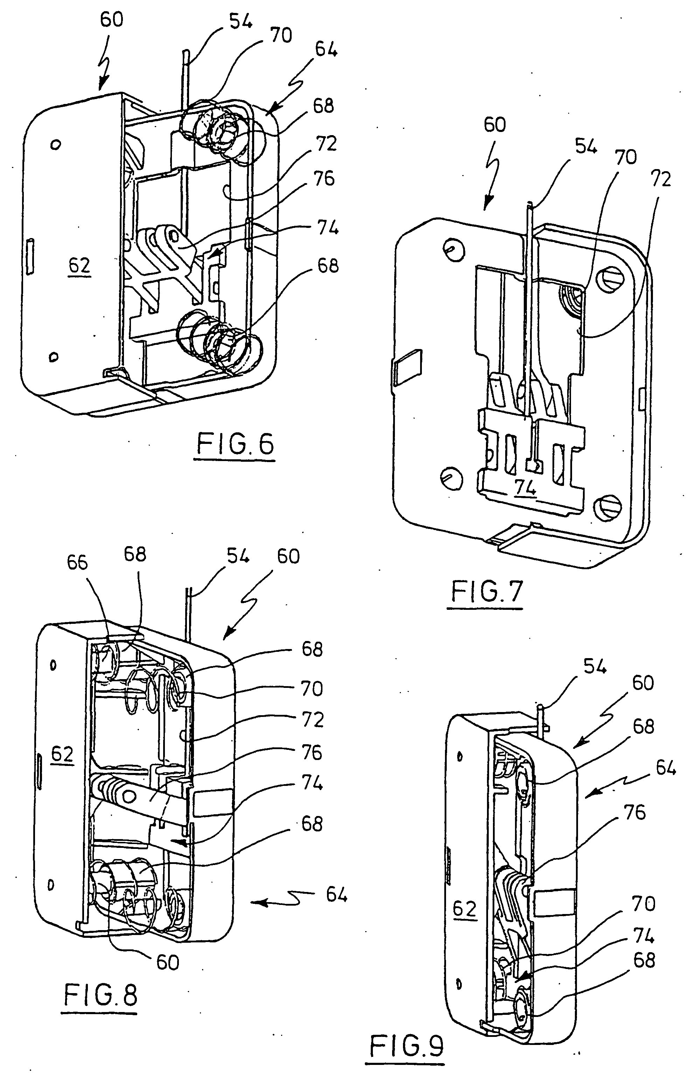

In der Längsmitte der Platte 16 ist eine Führung 52 in Form einer halben Hülse geformt, durch welche sich ein Seil 54 (siehe auch Fig. 4) hindurch erstreckt. Das Seil ist über einen Knebel bei 56 an einem nach hinten über die Schwenkachse überstehenden Hebelarm 58 angehängt. Durch eine Zugbewegung am Seil 54 läßt sich mithin die Trägerplatte 22 aus einer zwischen den Säulenabschnitten 12, 14 befindlichen Position in eine davor liegende Position gemäß den Figuren 4 und 5 verschwenken. In diesem Fall ist daher die Betätigung des beweglichen Trägerteils 22 nicht über eine Feder unmittelbar an der Kopfstütze ausgelöst, sondern die Betätigung erfolgt entfernt von der Kopfstütze mit einer Betätigungsvorrichtung, wie sie in den Figuren 6 bis 9 beispielhaft beschrieben ist.

Die Betätigungsvorrichtung in den Figuren 6 bis 9 trägt das Bezugszeichen 60. Sie weist ein erstes kastenförmiges Teil 62 auf, das teleskopisch ein zweites kastenförmiges Teil 64 aufnimmt. An der Deckenwand des kastenförmigen Teils 62 sind innen an den Ecken vier im Querschnitt kreisförmige Führungsstifte 66 geformt, welche in kreisförmigen Führungen 68 des kastenförmigen Teils 64 aufgenommen sind. Zwischen den Führungen 68 und um die Stifte 66 herum sind Schraubenfedern 70 angeordnet.

In einer Ausnehmung 72 des Deckenabschnitt des kastenförmigen Teils 64 ist ein Schlitten 74 angeordnet. Der Schlitten 74 gleitet in dem engeren Teil der Ausnehmung 72 und hat seitlich Nuten (nicht bezeichnet), die mit den Kanten der Ausnehmung 72 zusammenwirken. Der Schlitten kann daher zwischen einer Position gemäß Fig. 6 und einer Position gemäß Fig. 7 hin und her verfahren. Am Schlitten ist das Seil 54 angeschlagen. Am Schlitten 74 ist auch ein Koppelhebel 76 angelenkt, der, wie insbesondere in Fig. 8 zu erkennen ist mit dem anderen Ende, an der inneren Seite des Deckenabschnitts des kastenförmigen Teils 62 angelenkt ist. In der entspannten Lage der Federn 70 gemäß Fig. 8 oder auch gemäß Fig. 6 ist der Koppelhebel 76 etwas schräg gelagert, und der Schlitten 74 befindet sich in der ersten Position. Wird nun zwischen den kastenförmigen Teilen 62, 64 ein Druck ausgeübt, nähern sich die kastenförmigen Teile 62, 64 unter einem Zusammendrücken der Federn 70 einander an. Dabei verschwenkt der Koppelhebel 76 und verstellt den Schlitten 74 in die andere Endlage gemäß Fig. 7. Auf diese Weise wird ein Zug auf das Seil 54 ausgeübt und das bewegliche Trägerteil 22 in die in den Figuren 4 und 5 dargestellte Position ausgefahren. Läßt der Druck zwischen den Teilen 62, 64 nach, dann entspannt sich das Seil 54, und das bewegliche Trägerteil 22 kann in die Ausgangsstellung zurückschwenken.

Die Betätigung der Betätigungsvorrichtung 60 nach den Figuren 6 bis 9 kann z.B. dadurch erfolgen, daß sie in die Rückenlehne eingebaut wird und durch vermehrten Druck vom Rücken der sitzenden Person betätigt werden. Dadurch wird automatisch ein Ausfahren des beweglichen Trägerteils 22 bei einem Aufprall auf das Heck des Fahrzeugs erhalten.

## Patentansprüche

1. Kopfstütze für Automobilsitze mit einem ersten, festen Trägerteil (10) und einem das erste Trägerteil (10) umgebenden festen Polsterteil und zwei mit dem ersten Trägerteil (10) verbundenen Stangen (28), die in Kopfstützenhülsen in der Lehne eines Sitzes aufnehmbar sind, einem am ersten Trägerteil (10) beweglich gelagerten zweiten Trägerteil (22) für ein bewegliches Polsterteil, das über ein Gestänge am ersten Trägerteil (10) gelagert und zwischen einer eingefahrenen, zumindest teilweise vom festen Polsterteil aufgenommen Position und einer ausgefahrenen Position und umgekehrt verstellbar ist, in der das bewegliche Polsterteil gegenüber dem festen Polsterteil zum Kopf der sitzenden Person hin vorbewegt ist, einer Federanodnung (40) zur Verstellung des zweiten Trägerteils (22) in die ausgefahrene Position, einer Verriegelungsvorrichtung, welche das zweite Trägerteil (22) oder die Federanordnung (40) in der eingefahrenen Position des zweiten Trägerteils (22) verriegelt, **dadurch gekennzeichnet, daß** ein Parallelogrammgestänge (24, 32, 36) vorgesehen ist derart, daß das Trägerteil (22) mit dem Polsterteil in der ausgefahrenen Position gegenüber dem festen Trägerteil (10) angehoben ist, daß das erste Trägerteil (10) zwei beabstandete säulenartige Abschnitte (12,14) aufweist, welche die Stangen (28) aufnehmen und welche durch eine Platte (16) verbunden sind und das zweite Trägerteil (22) plattenförmig ist und in der eingefahrenen Position zwischen den säulenartigen Abschnitten (12, 14) liegt, wobei das Parallelogrammgestänge (24, 32, 36) an der Platte (16) angelenkt ist.

2. Kopfstütze nach Anspruch 1, **dadurch gekennzeichnet, daß** ein vorzugsweise federvorgespannter Verriegelungshaken (42) oder dergleichen das Parallelogrammgestänge in der eingefahrenen Position hält und mittels eines Kabelzuges (50) betätigbar ist.

3. Kopfstütze nach einem der Ansprüche 1 oder 2, **dadurch gekennzeichnet, daß** eine entfernt von der Kopfstütze angeordnete Betätigungsvorrichtung (60) über einen Kabelzug (54) auf das bewegliche Trägerteil (22) einwirkt zur Verstellung in die ausgefahrene Position.

4. Kopfstütze nach Anspruch 2 oder 3, **dadurch gekennzeichnet, daß** der Kabelzug (54) an einem Arm (58) des Parallelogrammgestänges angreift.

5. Kopfstütze nach Anspruch 4, **dadurch gekennzeichnet, daß** die Betätigungsvorrichtung (60) ein erstes und zweites Bauteil (62, 64) aufweist, die aufeinander zu und voneinander fort beweglich gelagert sind und zwischen denen mindestens eine Feder (70) angeordnet ist, welche die Bauteile (62, 64) voneinander fort vorspannt, an einem Bauteil (64) ein Schlitten (74) geführt ist, an dem ein Hebel (76) angelenkt ist, der mit dem anderen Ende am anderen Bauteil (62) angelenkt ist und am Schlitten (74) der Kabelzug (54) angeschlagen ist, wodurch der Schlitten (74) verfahren und ein Zug auf das Kabel (54) ausgeübt wird, wenn die Bauteile (62, 64) aufeinander zu bewegt werden.

6. Kopfstütze nach Anspruch 5, **dadurch gekennzeichnet, daß** die Bauteile (62, 64) kastenartig und teleskopisch ineinander gesteckt sind.

7. Kopfstütze nach einem der Ansprüche 1 bis 6, **dadurch gekennzeichnet, daß** das erste Trägerteil (10) annähernd U-förmig ist.

## Claims

1. A headrest for seats in automobiles comprising a first fix support member (10) and a fixed pad member enclosing the fixed support member (10) and two rods (28) connected to the fixed support member (10), the rods being accommodated in the back rest of the seat, a second support member (22) for a moveable pad supported by the first support member (10) through a lever system, the second support member (22) being moveable between a first retracted position wherein it is at least partially accommodated by the fixed support pad, and a second extended position and vice-versa, wherein the moveable pad is moved relative to fixed pad towards the head of the person sitting on the seat, spring means (40) for the movement of the second support member (22) into the extended position, locking means which lock the second support member (22) or the spring means (40) in the retracted position of the second support member (22), **characterized in that** a parallelogram linkage system (24, 32, 36) is provided such that the second support member (22) together with a pad in the extended position is devated relative to the fixed support member (10), that the first support member (10) has two spaced column-shaped portions (12, 14) which accommodate the rods (28) and are interconnected by a plate member (16) and the second support member (22) is plate-shaped and is located between the column-shaped portions (12, 14) in the retracted position, the parallelogram linkage system (24, 32, 36) being linked to the plate member (16).

2. The headrest of claim 1, wherein preferably a spring biased locking hook (42) or the like is provided which holds the parallelogram linkage system in the retracted position and is actuable by a cable (50).

3. The headrest of claim 1 or 2, wherein actuation means (60) remote with respect to the headrest act on the moveable support member (22) for movement into the extended position by a cable (54).

4. The headrest of claim 2 or 3, wherein the cable (44) engages an arm (58) of the parallelogram linkage system.

5. The headrest of claim 4, wherein the actuation means (60) as a first and a second structural member (62, 64) which are supported for movement towards and away from each other, at least one spring (70) being located between the first and the second structural member which biases the structural members away from each other, a slide (74) being guided by one structural member (64), a lever (76) being linked to slide (74), the other end of the lever being linked to the other structural member (62) and a cable (54) engaging the slide (74) whereby the slide (74) can be moved and a tension being applied to the cable (54) when the structural members (62, 64) are moved towards each other.

6. The headrest of claim 5, wherein the structural members (62, 64) are box shaped and engage each other telescopically.

7. The headrest of one of the claims 1 to 6, wherein the first structural member (10) is approximately U-shaped.

## Revendications

1. Appuie-tête pour des sièges d'une automobile, avec un premier élément support fixe (10) et avec un élément capitonné fixe entourant le premier élément support (10) et avec deux barres (28) reliées au premier élément support (10), qui peuvent être logées dans des douilles pour appuie-tête dans le dossier d'un siège, avec un deuxième élément support (22) logé de façon mobile sur le premier élément support (10) pour un élément capitonné mobile 10, qui par l'intermédiaire d'une tringle est logé sur le premier élément support (10) et qui est réglable entre une position rentrée réceptionnée au moins partiellement par l'élément capitonné fixe et une position sortie et inversement, dans laquelle l'élément capitonné mobile est déplacé vers l'avant par rapport à l'élément capitonné fixe, vers la tête de la personne assise, avec un agencement de ressorts (40) pour le déplacement du deuxième élément support (22) en position sortie, avec un dispositif de verrouillage qui verrouille le deuxième élément support (22) ou l'agencement de ressorts (40) dans la position rentrée du deuxième élément support (22), **caractérisé en ce qu'**on a prévu une tringle en forme de parallélogramme (24, 32, 36), de façon à ce que l'élément support (22) avec l'élément capitonné dans la position sortie soit relevé par rapport à l'élément support fixe (10), **en ce que** le premier élément support (10) comporte deux sections distancées (12, 14) ayant la forme de colonnes, qui réceptionnent les barres (28) qui sont reliées par une plaque (16) et **en ce que** le deuxième élément support (22) à la forme d'une plaque et dans la position rentrée, il se situe entre les sections (12, 14) ayant la forme de colonnes, la tringle en forme de parallélogramme (24, 32, 36) étant articulée sur la plaque (16).

2. Appuie-tête selon la revendication 1, **caractérisé en ce qu'**un crochet de verrouillage (42) de préférence précontraint par ressort ou similaire maintient la tringle en forme de parallélogramme dans la position rentrée et est actionnable par un système de câble (50).

3. Appuie-tête selon la revendication 1 ou 2, **caractérisé en ce qu'**un dispositif d'actionnement (60) disposé à distance de l'appuie-tête agit sur l'élément support mobile (22), par l'intermédiaire du système de câble (54), pour le déplacement en position sortie.

4. Appuie-tête selon la revendication 2 ou 3, **caractérisé en ce que** le système de câble (54) s'accroche sur un bras (58) de la tringle en forme de parallélogramme.

5. Appuie-tête selon la revendication 4, **caractérisé en ce que** le dispositif d'actionnement (60) comporte un premier et un deuxième élément constitutif (62, 64) qui sont logés de façon mobile pour se rapprocher ou s'éloigner l'un de l'autre, entre lesquels est disposé au moins un ressort (70) qui précontraint les éléments constitutifs (62, 64) en les écartant l'un de l'autre, **en ce qu'**un coulisseau (74) sur lequel est articulé un levier (76), qui par son autre extrémité est articulé sur l'autre élément constitutif (62) est guidé sur un élément constitutif (64) et **en ce que** le système de câble (57) est monté sur le coulisseau (74), ce qui a pour effet de déplacer le coulisseau (74) et d'exercer une traction sur le câble (54) lorsqu'on déplace les éléments constitutifs (62, 64) l'un vers l'autre.

6. Appuie-tête selon la revendication 5, **caractérisé en ce que** les éléments constitutifs (62, 64) sont enfichés l'un dans l'autre à la manière d'un caisson et de façon télescopique.

7. Appuie-tête selon l'une quelconque des revendications 1 à 6, **caractérisé en ce que** le premier élément support (10) a approximativement la forme d'un U.
